# EUROPÄISCHE PATENTSCHRIFT

(11) **EP 1 196 829 B1**
(45) Veröffentlichungstag und Bekanntmachung des Hinweises auf die Patenterteilung: **06.05.2004**
(21) Anmeldenummer: 00958105.9
(22) Anmeldetag: 05.07.2000
(51) Int. Cl.: G05B 19/042

(54) **BAUSTEIN ZUR STEUERUNG EINES ANTRIEBS**
MODULE FOR CONTROLLING A DRIVE
MODULE DE COMMANDE D'UN MECANISME D'ENTRAINEMENT

(30) Priorität: 09.07.1999 DE 19932193
(43) Veröffentlichungstag der Anmeldung: 17.04.2002
(73) Patentinhaber: Framatome ANP GmbH, 91058 Erlangen (DE)
(72) Erfinder: GARCIA TELLO, Jose, Antonio, D-91052 Erlangen (DE); HESSEL, Bernd, D-91325 Adelsdorf (DE); MERTENS, Uwe, D-91074 Herzogenaurach (DE)
(74) Vertreter: Tergau & Pohl Patentanwälte
(86) Internationale Anmeldenummer: PCT/DE2000/002201
(87) Internationale Veröffentlichungsnummer: WO 2001/004710

(56) Entgegenhaltungen:
- EP-A- 0 987 612
- WO-A-98/56009
- DE-A- 2 932 384
- DE-A- 4 216 699
- US-A- 4 692 299
- US-A- 5 361 198
- US-A- 5 621 776
- US-A- 5 832 049

## Beschreibung

Die vorliegende Erfindung betrifft einen Baustein zur Steuerung eines Antriebs, insbesondere eines Antriebs in einer Anlage, die die öffentliche Sicherheit gefährden kann, mit zwei Anschlüssen zur Verbindung mit einem Leittechniksystem für Betriebsaufgaben und einem Leittechniksystem für Sicherheitsaufgaben, wobei Befehle aus dem Leittechniksystem für Sicherheitsaufgaben Vorrang vor Befehlen aus dem Leittechniksystem für Betriebsaufgaben haben, sowie einem oder mehreren Ausgängen.

Unter Anlagen, die die öffentliche Sicherheit gefährden können, werden unter anderem Kraftwerke, insbesondere Kernkraftwerke, verstanden. In diesen Anlagen vorhandene elektrische Antriebe werden sowohl von einem Leittechniksystem für Betriebsaufgaben als auch von einem Leittechniksystem für Sicherheitsaufgaben angesteuert. Es muß sichergestellt werden, daß die Befehle des Leittechniksystems für Sicherheitsaufgaben Vorrang vor den Befehlen des Leittechniksystems für Betriebsaufgaben haben. Hierzu wird ein Baustein verwendet, der auch als Vorrangbaustein bezeichnet wird.

Ein derartiger Baustein wird beispielsweise von der Anmelderin eingesetzt. Der bekannte Baustein ist relativ groß und weist eine hohe Verlustleistung von knapp 5 Watt auf. Bei Nachrüstungen in Anlagen ist der vorhandene Platz daher häufig der begrenzende Faktor. Weiter wird der bekannte Baustein über Einzeldrähte angesteuert und läßt sich daher nur schwer in digitale Leittechniksysteme integrieren. Ein derartiger Baustein ist beispielsweise auch aus der US-A-5 832 049 bekannt.

Aufgabe der vorliegenden Erfindung ist es daher, einen Baustein bereitzustellen, der kleinere Abmessungen und eine geringere Verlustleistung als der bekannte Baustein aufweist und auch in digitale Leittechniksysteme integriert werden.

Erfindungsgemäß wird diese Aufgabe bei einem Baustein der eingangs genannten Art dadurch gelöst, dass der Baustein eine Schnittstelle zur Verbindung mit dem Leittechniksystem für Betriebsaufgaben oder einem Diagnosegerät sowie einen Speicher zum Abspeichern von Befehlen und Rückmeldungen umfaßt, und dass ein Mikroprozessor zur Verarbeitung von Befehlen datenstromseitig zu einem Logikschaltkreis für den Vorrang der Befehle aus dem Leittechniksystem für Sicherheitsaufgaben parallel geschaltet ist.

Durch die erfindungsgemäßen Maßnahmen können die Abmessungen und auch die Verlustleistung halbiert werden. Es können daher doppelt so viele Bausteine wie bisher auf dem gleichen Raum untergebracht werden. Die Wärmeentwicklung bleibt hierbei wegen der halbierten Verlustleistung unverändert, so dass bestehende Hilfssysteme wie beispielsweise eine Lüftung auch bei Nachrüstungen übernommen werden können. Weiter können alle Befehle und die zugehörigen Rückmeldungen in dem Speicher abgelegt und zu Prüfzwecken ausgelesen und kontrolliert werden. Der Logikschaltkreis stellt den gewünschten Vorrang der Befehle des Leittechniksystems für Sicherheitsaufgaben sicher. Der erfindungsgemäße Baustein kann aufgrund der Schnittstelle rasch und einfach in digitale Leittechniksysteme integriert und/oder an ein Diagnosegerät angeschlossen werden.

Vorteilhafte Ausgestaltungen und Weiterbildungen der Erfindung gehen aus den abhängigen Ansprüchen hervor.

Vorteilhaft umfaßt der Mikroprozessor einen Zeitschaltkreis. Die Befehle und Rückmeldungen können dann zusammen mit der Uhrzeit protokolliert werden.

In vorteilhafter Ausgestaltung ist der Logikschaltkreis mit einer fest einprogrammierten Vorrangfunktion für Befehle aus dem Leittechniksystem für Sicherheitsaufgaben versehen. Änderungen in der Software lassen daher den Vorrang der Befehle aus dem Leittechniksystem für Sicherheitsaufgaben unberührt, so daß ein versehentliches Löschen des Vorrangs ausgeschlossen ist.

Gemäß einer vorteilhaften Weiterbildung weist der Baustein mindestens eine elektronische Sicherung gegen einen Kurzschluß eines Ausgangs auf. Hierdurch wird der Baustein vor Beschädigungen geschützt und die Lebensdauer erhöht.

Vorteilhaft weist der Baustein an einer in eingebautem Zustand zugänglichen Seite Codierstecker auf. Mittels dieser Codierstecker kann der zugeordnete Antrieb in eine Position wie Auf oder Zu beziehungsweise Ein oder Aus gefahren und dort gehalten werden. Dieser Eingriff hat oberste Priorität und ist von den Leittechniksystemen unabhängig. Das Anbringen der Codierstecker wird von jedem Baustein gemeldet, so daß jederzeit eine Kontrolle durch das Bedienpersonal gegeben ist.

Die Erfindung betrifft weiter eine Steuereinrichtung für eine Anlage, die die öffentliche Sicherheit gefährden kann, unter Verwendung eines oben beschriebenen Bausteins, wobei der Baustein mit zwei voneinander getrennten Handsteuerstellen verbunden ist. Die Handsteuerstellen ermöglichen eine manuelle Steuerung des Bausteins durch das Bedienpersonal unter Umgehung des Leittechniksystems für Betriebsaufgaben. Dies ist insbesondere für einen Test der Anlage erforderlich.

Es wird weiter ein Verfahren zum Steuern eines Antriebs unter Verwendung des obigen Bausteins in einer derartigen Steuereinrichtung beschrieben, bei dem erfindungsgemäß der Zustand des Antriebs in beiden Handsteuerstellen angezeigt wird. Das Bedienpersonal ist daher stets über den Zustand des Antriebs unterrichtet.

Vorteilhaft wird die zum Betrieb des Bausteins erforderliche Software von einem Diagnosegerät ausgelesen. Hierdurch kann die vorhandene Software identifiziert werden.

Mittels eines separaten Meß- und Prüfgeräts ist auch das Einspielen neuer Software mit geringem Aufwand möglich. Eine Änderung der Software ist ausgeschlossen, solange der Baustein in eine Anlage eingebaut ist. Hierdurch werden Risiken durch Manipulationen der Software im Betrieb ausgeschlossen.

In erster vorteilhafter Weiterbildung wird das Diagnosegerät an einem Bus angeschlossen, der mit dem Baustein in Verbindung steht. Diese Schaltung wird bei modernen Anlagen vorgenommen. Das Diagnosegerät prüft den Baustein dann über den Bus und gegebenenfalls weitere zwischengeschaltete Systeme.

Nach einer zweiten vorteilhaften Ausgestaltung wird das Diagnosegerät an die Schnittstelle des Bausteins angeschlossen. Diese Schaltung wird bei älteren Anlagen ohne Bus verwendet.

Die erfindungsgemäß vorgesehen Schnittstelle erlaubt einen Anschluß sowohl an einen Bus als auch an Einzeldrähte in älteren Anlagen. Die Software des Bausteins wird auf die jeweils vorhandenen Leittechniksysteme und die Verkabelung abgestimmt. Der Baustein kann daher problemlos in das in der Anlage vorhandene System integriert werden. Es ist der Einsatz in jedem Leittechniksystem möglich, das Einzelsignale verarbeiten oder über einen Bus kommunizieren kann. Die Schnittstelle wird vorteilhaft redundant ausgelegt, so daß redundante Systeme der Leittechniksysteme zum Einsatz kommen können. Dies erlaubt die Verwendung hochverfügbarer Systeme.

Der erfindungsgemäße Baustein ermöglicht eine Prüfung der Vorrangfunktion zwischen Betriebsaufgaben und Sicherheitsaufgaben im laufenden Betrieb mittels des "Boundary Scan Test".

Die Prüfung des Leittechniksystems für Sicherheitsaufgaben zu dem Baustein erfolgt über kurze, impulsförmige Auslösungen der Befehle für den Antrieb. Gleichzeitig wird ein Prüfsignal übermittelt, das ein scharfes Anfahren des Antriebs verhindert. Die Ankunft der Befehle wird vom Baustein bestätigt. Daher ist ein scharfes Anfahren des Antriebs nur noch zum Prüfen des Leittechniksystems für Betriebsaufgaben erforderlich. Ein betriebsbedingt auftretendes Verfahren des Antriebs kann in die Prüfung eingebunden werden.

Nachstehend wird die Erfindung anhand von Ausführungsbeispielen näher beschrieben, die in schematischer Weise in der Zeichnung dargestellt sind. Dabei zeigt:
- FIG 1: eine schematische Darstellung einer Anlage,
- FIG 2: eine schematische Darstellung des erfindungsgemäßen Bausteins,
- FIG 3: ein erstes Schaltbild bei Verwendung des erfindungsgemäßen Bausteins und
- FIG 4: ein zweites Schaubild ähnlich Figur 3.

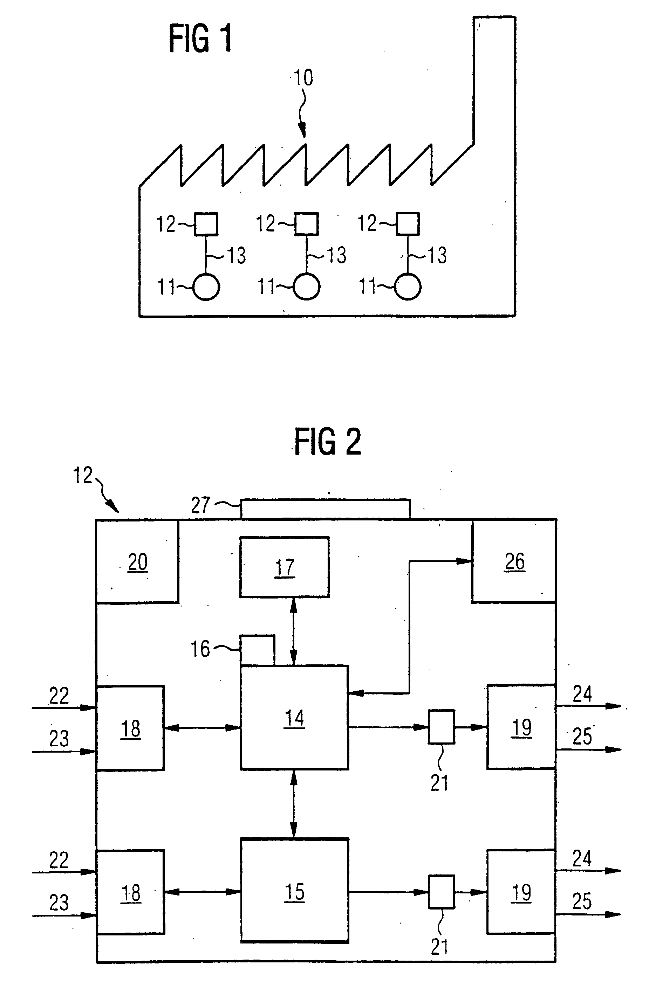

Figur 1 zeigt schematisch eine Anlage 10, die die öffentliche Sicherheit gefährden kann. Die Anlage 10 weist eine Reihe von Antrieben 11 auf, die über Bausteine 12 angesteuert werden. Jedem Antrieb 11 ist genau ein Baustein 12 zugeordnet.

In Figur 2 ist der Aufbau eines Bausteins 12 schematisch dargestellt. Der Baustein 12 umfaßt einen Mikroprozessor 14, einen Logikschaltkreis 15 und einen Zeitschaltkreis 16. Dem Mikroprozessor 14 ist ein Speicher 17 zugeordnet. Es sind weiter Anschlüsse 18 sowie Ausgänge 19 vorhanden, die mehrere Signale übertragen können, wie durch die Pfeile 22 bis 25 dargestellt. Der Mikroprozessor 14 und der Logikschaltkreis 15 sind über eine elektronische Sicherung 21 gegen einen Kurzschluß des jeweiligen Ausgangs 19 gesichert. Die zum Betrieb des Bausteins 12 erforderliche Energie wird über eine Energieversorgung 20 zugeführt. Der Baustein 12 weist weiter eine Schnittstelle 26 zum Anschließen an ein Diagnosegerät oder einen Bus auf. An einer in eingebautem Zustand des Bausteins 12 zugänglichen Seite sind Codierstecker 27 vorgesehen, die ein Verfahren des Antriebs 11 ermöglichen.

Dem Baustein 12 werden gemäß den Pfeil 22, 23 Befehle von einem Leittechniksystem 31 für Betriebsaufgaben und einem Leittechniksystem 32 für Sicherheitsaufgaben zugeführt. Die Befehle des Leittechniksystems 32 für Sicherheitsaufgaben müssen vorrangig behandelt werden. Der Logikschaltkreis 15 weist zu diesem Zweck eine fest einprogrammierte Vorrangfunktion auf.

In Abhängigkeit von. den erhaltenen Befehlen gibt der Baustein 12 Ausgangssignale gemäß den Pfeilen 24, 25 an.den Antrieb 11. Es kann sich hierbei um Anfahrsignale für den Antrieb 11 oder um ein Testsignal handeln. Der Zustand des Antriebs 11 wird von dem Baustein 12 erkannt, beispielsweise über einen Endanschlagschalter oder eine Messung des Drehmoments.

Die Befehle sowie die Ausgangssignale werden zusammen mit der Uhrzeit in dem Speicher 17 abgelegt, so daß der Betrieb protokolliert wird. Zur Prüfung wird der Speicher 17 periodisch oder in Abhängigkeit vom Betriebsverhalten ausgelesen.

Der Anschluß 18 und die Schnittstelle 26 ermöglichen auch das Abrufen von Informationen aus dem Baustein 12. Es kann insbesondere der Inhalt des Speichers 17 oder die von dem Mikroprozessor 14 verwendete Software ausgelesen werden. In Abhängigkeit vom jeweiligen Anwendungsfall können einer oder beide Anschlüsse 18 entfallen und ihre Funktionen in die Schnittstelle 26 integriert werden.

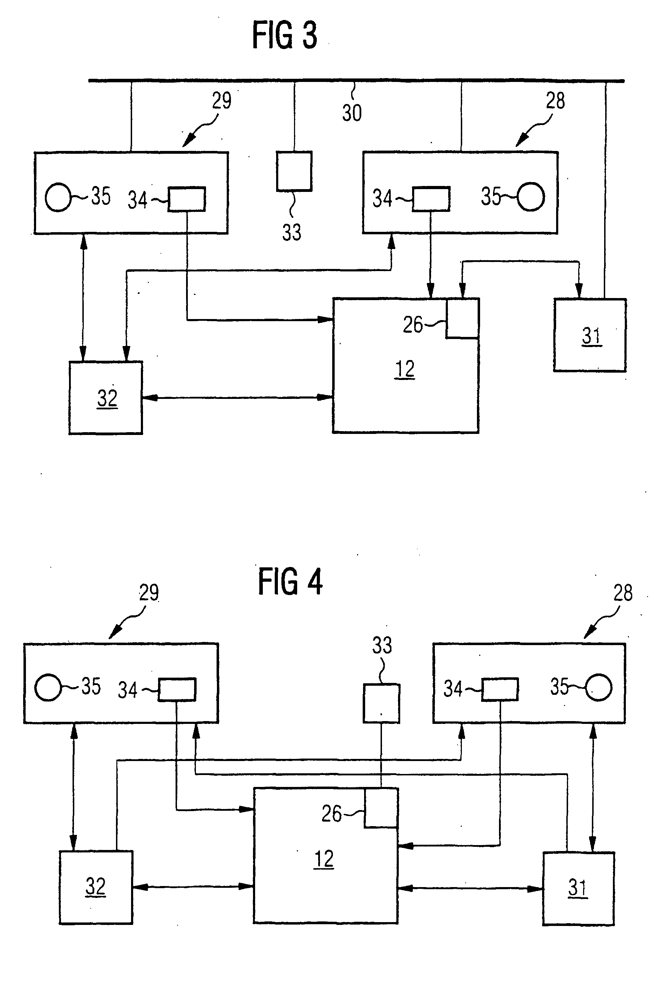

Die Figuren 3 und 4 zeigen zwei unterschiedliche Anschlußvarianten. Die Variante gemäß Figur 3 zeigt den Einsatz des Bausteins 12 in einer modernen Anlage 11 mit einem Bus 30, während in Figur 4 der Baustein 12 in einer alten Anlage 11 mit Einzelverkabelung nachgerüstet worden ist.

In beiden Varianten sind eine Hauptwarte 28 und eine Notwarte 29 vorgesehen. Im Normalzustand wird die Anlage von der Hauptwarte 28 gefahren. Nach Ausfall der Hauptwarte 28 wird auf die Notwarte 29 umgeschaltet. Die Hauptwarte 28 und die Notwarte 29 weisen Steuertischfelder 33 für eine Steuerung bestimmter, betriebs- oder sicherheitskritischer Antriebe 11 von Hand auf. Es sind weiter Anzeigen 35 vorgesehen, die den Zustand dieser oder anderer Antriebe 11 anzeigen.

In beiden Ausgestaltungen sind ein Leittechniksystem 31 für Betriebsaufgaben sowie ein Leittechniksystem 32 für Sicherheitsaufgaben vorgesehen. Sobald ein sicherheitsrelevanter Zustand erkannt wird, werden die erforderlichen Maßnahmen vom Leittechniksystem 32 für Sicherheitsaufgaben vorgeschlagen oder, je nach Einstellung, sofort ausgeführt.

In Figur 3 ist der Baustein 12 mit dem Leittechniksystem 31 für Betriebsaufgaben verbunden. Das Leittechniksystem 31 ist an den Bus 30 angeschlossen, der mit der Hauptwarte 28 und der Notwarte 29 verbunden ist. Das Diagnosegerät 33 wird auf den Bus 30 aufgeklemmt. Das Leittechniksystem 32 für Sicherheitsaufgaben ist unabhängig von dem Bus 30. Es steht mit dem Baustein 12, der Hauptwarte 28 und der Notwarte 29 in Verbindung.

Bei der Ausgestaltung gemäß Figur 4 ist der Baustein 12 nicht an den Bus 30 angeschlossen, sondern direkt verkabelt. Für gleiche oder funktionsidentische Bauteile werden dieselben Bezugszeichen wie in den vorhergehenden Figuren verwendet.

Im Normalbetrieb wird der Baustein 12 von der Hauptwarte 28 über Leittechniksystem 31 für Betriebsaufgaben gesteuert. Gegebenenfalls greift das Leittechniksystem 32 für Sicherheitsaufgaben ein, dessen Befehle von dem Baustein 12 vorrangig behandelt werden. Beide Leittechniksysteme 31, 32 sind mit der Hauptwarte 28 und der Notwarte 29 verbunden.

In beiden Ausgestaltungen werden durch den erfindungsgemäßen Baustein 12 der Platzbedarf und die Verlustleistung wesentlich verringert. Weiter kann der Baustein 12 in modernen Anlagen 10 mit digitaler Leittechnik eingesetzt werden, aber auch in bereits bestehenden Anlagen 10 nachgerüstet werden.

## Patentansprüche

1. Baustein zur Steuerung eines Antriebs (11), insbesondere eines Antriebs in einer Anlage (10), die die öffentliche Sicherheit gefährden kann, mit einem Anschluß (18) zur Verbindung mit einem Leittechniksystem (31) für Betriebsaufgaben und einem Leittechniksystem (32) für Sicherheitsaufgaben, wobei Befehle aus dem Leittechniksystem (32) für Sicherheitsaufgaben Vorrang vor Befehlen aus dem Leittechniksystem (31) für Betriebsaufgaben haben, sowie einem oder mehreren Ausgängen (19), **dadurch gekennzeichnet, dass** der Baustein (12) eine Schnittstelle (26) zur Verbindung mit dem Leittechniksystem (31) für Betriebsaufgaben oder einem Diagnosegerät (33) sowie einen Speicher (17) zum Abspeichern von Befehlen und Rückmeldungen umfasst, und dass ein Mikroprozessor (14) zur Verarbeitung von Befehlen datenstromseitig zu einem Logikschaltkreis (15) für den Vorrang der Befehle aus dem Leittechniksystem (32) für Sicherheitsaufgaben parallel geschaltet ist.

2. Baustein nach Anspruch 1,
**dadurch gekennzeichnet, dass** der Baustein (12) mindestens eine elektronische Sicherung (21) gegen einen Kurzschluß eines Ausgangs (19) aufweist.

3. Baustein nach Anspruch 1 und 2,
**dadurch gekennzeichnet, dass** der Baustein (12) an einer in eingebautem Zustand zugänglichen Seite Codierstecker (27) aufweist, wobei ein Eingriff mittels eines Codiersteckers (27) höchste Priorität hat.

4. Steuereinrichtung für eine Anlage (10), die die öffentliche Sicherheit gefährden kann, unter Verwendung eines Bausteins (12) nach einem der vorhergehenden Ansprüche, **dadurch gekennzeichnet, daß** der Baustein (12) mit zwei voneinander getrennten Handsteuerstellen (28, 29) verbunden ist.

5. Verfahren zum Steuern eines Antriebs unter Verwendung eines Bausteins (12) nach einem der Ansprüche 1 bis 3 in einer Steuereinrichtung gemäß Anspruch 4,
**dadurch gekennzeichnet, daß** der Zustand des Antriebs (11) in beiden Handsteuerstellen (27, 28) angezeigt wird.

6. Verfahren nach Anspruch 5,
**dadurch gekennzeichnet, daß** die zum Betrieb des Bausteins (12) erforderliche Software von dem Diagnosegerät (33) ausgelesen wird.

7. Verfahren nach Anspruch 6,
**dadurch gekennzeichnet, daß** das Diagnosegerät (33) an einem Bus (30) angeschlossen wird, der mit dem Baustein (12) in Verbindung steht.

8. Verfahren nach Anspruch 6,
**dadurch gekennzeichnet, daß** das Diagnosegerät (33) an die Schnittstelle (26) des Bausteins (12) angeschlossen wird.

## Claims

1. Module for controlling a drive (11), in particular a drive in an installation (10) which can endanger public safety, having a terminal (18) for connection to a control system (31) for operating tasks and a control system (32) for safety tasks, commands from the control system (32) for safety tasks having priority over commands from the control system (31) for operating tasks, and also having one or more outputs (19),
**characterized in that** the module (12) comprises an interface (26) for connection to the control system (31) for operating tasks or a diagnostic device (33), and also a memory (17) for storing commands and replies, and **in that** a microprocessor (14) for processing commands on the data flow side is connected in parallel with a logic circuit (15) for the priority of the commands from the control system (32) for safety tasks.

2. Module according to Claim 1,
**characterized in that** the module (12) has at least one electronic protection device (21) protecting against a short circuit of an output (19).

3. Module according to Claims 1 and 2,
**characterized in that** the module (12) has coding plugs (27) on a side which is accessible in the installed state, an intervention by means of a coding plug (27) having the highest priority.

4. Control device for an installation (10) which can endanger public safety, using a module (12) according to one of the preceding claims, **characterized in that** the module (12) is connected to two manual control stations (28, 29) that are separate from one another.

5. Method for controlling a drive using a module (12) according to one of Claims 1 to 3 in a control device according to Claim 4,
**characterized in that** the state of the drive (11) is indicated in both manual control stations (27, 28).

6. Method according to Claim 5,
**characterized in that** the software required for operating the module (12) is read out by the diagnostic device (33).

7. Method according to Claim 6,
**characterized in that** the diagnostic device (33) is connected to a bus (30) connected to the module (12).

8. Method according to Claim 6,
**characterized in that** the diagnostic device (33) is connected to the interface (26) of the module (12).

## Revendications

1. Module de commande d'un dispositif (11) d'entraînement notamment d'un dispositif d'entraînement dans une installation (10) qui peut mettre en danger la sécurité publique comprenant une borne (18) de liaison avec un système (31) de technique de pilotage pour des tâches de fonctionnement et avec un système (32) de technique de pilotage pour des tâches de sécurité, des instructions provenant du système (32) de technique de pilotage pour des tâches de sécurité ayant la pré-séance sur des instructions provenant du système (31) de technique de pilotage pour des tâches de fonctionnement, ainsi qu'une ou plusieurs sorties (19), **caractérisé en ce que** le module (12) comprend un interface (26) de liaison avec le système (31) de technique de pilotage pour des tâches de fonctionnement ou avec un appareil (33) de diagnostic, ainsi qu'une mémoire (17) de mémorisation d'instructions et d'informations en retour, et **en ce qu'**un microprocesseur (14) de traitement d'instructions est monté, côté flux des données, en parallèle à un circuit (15) logique pour la préséance des instructions provenant du système (32) de technique de pilotage pour des tâches de sécurité.

2. Module suivant la revendication 1,
**caractérisé en ce que** le module (12) a au moins une sécurité (21) électronique vis-à-vis d'un court-circuit d'une sortie (19).

3. Module suivant la revendication 1 ou 2,
**caractérisé en ce que** le module (12) a, sur un côté accessible à l'état monté, un connecteur (27) de codage, une action au moyen d'un connecteur (27) de codage ayant la priorité la plus grande.

4. Dispositif de commande d'une installation (10) qui peut mettre en danger la sécurité publique en utilisant un module (12) suivant l'une des revendications précédentes, **caractérisé en ce que** le module (12) est relié à deux points (28, 29) de commande manuelle séparés l'un de l'autre.

5. Procédé de commande d'un dispositif d'entraînement en utilisant un module (12) suivant l'une des revendications 1 à 3, dans un dispositif de commande suivant la revendication 4,
**caractérisé en ce que** l'on affiche l'état du dispositif (11) d'entraînement dans les deux points (27, 28) de commande manuelle.

6. Procédé suivant la revendication 5, **caractérisé en ce que** l'on fait lire le logiciel nécessaire au fonctionnement du module (12) par l'appareil (33) de diagnostic.

7. Procédé suivant la revendication 6, **caractérisé en ce que** l'on raccorde l'appareil (33) de diagnostic à un bus (30) qui est en liaison avec le module (12).

8. Procédé suivant la revendication 6, **caractérisé en ce que** l'on raccorde l'appareil (33) de diagnostic à l'interface (26) du module (12).
